(19) Europäisches Patentamt
European Patent Office
Office européen des brevets

(11) Veröffentlichungsnummer: **0 104 144**
**B1**

# (12) EUROPÄISCHE PATENTSCHRIFT

(45) Veröffentlichungstag der Patentschrift: **20.07.88**

(51) Int. Cl.⁴: **C 08 G 59/68,** C 08 G 59/70, C 08 G 59/72, C 08 G 59/62

(21) Anmeldenummer: **83810412.3**

(22) Anmeldetag: **12.09.83**

(54) **Verwendung von einer Menge aus einem Diaryljodosylsalz und einem Katalysator als Härtungsmittel in Heißhärtbaren Epoxidharzen.**

(30) Priorität: **18.09.82 GB 8226705**

(43) Veröffentlichungstag der Anmeldung: **28.03.84 Patentblatt 84/13**

(45) Bekanntmachung des Hinweises auf die Patenterteilung: **20.07.88 Patentblatt 88/29**

(84) Benannte Vertragsstaaten: **BE CH DE FR GB IT LI NL SE**

(56) Entgegenhaltungen:
**WO-A-82/04258**
**GB-A-2 038 835**
**GB-A-2 085 011**

**The Journal of Organic Chemistry, vol. 33, no. 7, July 1968, p. 2082**

(73) Patentinhaber: **CIBA- GEIGY AG, Klybeckstrasse 141, CH- 4002 Basel (CH)**

(72) Erfinder: **Irving, Edward, Dr., 41, Swaffham Road, Burwell Cambridge CB5 OAN (GB)**

**EP 0 104 144 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Es ist bekannt, dass kationisch polymerisierbare Verbindungen, einschliesslich Epoxidharze, d. h. Verbindungen, die im Durchschnitt mehr als eine 1,2-Epoxidgruppe im Molekül enthalten, photopolymerisiert werden können, wenn man diesen vor der Bestrahlung mit UV-Licht bestimmte Oniumsalze zusetzt. Jodoniumsalze, die für die Photopolymerisation verwendbar sind, werden beispielsweise in den GB-A-1 491 540, GB-A-1 516 352 und GB-A-1 539 192 beschrieben.

Spätere Veröffentlichungen beschreiben Verfahren bei welchen diese und andere Oniumsalze zum Heißhärten von kationisch polymerisierbaren Verbindungen eingesetzt werden.

So beschreibt beispielsweise das US-A-4 216 288 heißhärtbare Mischungen, enthaltend

(A) eine kationisch polymerisierbare Verbindung,

(B) ein aromatisches Oniumsalz, wie beispielsweise Diphenyljodoniumhexafluorarsenat und

(C) ein Reduktionsmittel wie Pentachlorthiophenol, Ferrocen oder Zinnoctanoat.

Ähnliche Mischungen werden im GB-A-2 042 550 beschrieben, wobei als Oniumsalze nur die Jodoniumsalze eingesetzt werden.

Im GB-A-2 081 271 werden als Heißhärtungsmittel für Epoxidharze Mischungen aus Oniumsalzen, wie beispielsweise Jodoniumsalze, und Peroxide, wie beispielsweise Dicumylperoxid oder tert.-Butylperbenzoat, offenbart.

Die Verwendung von Cu-Salzen oder anderen Kupferverbindungen zusammen mit Jodoniumsalzen als Heißhärtungsmittel für kationisch polymerisierbare Verbindungen geht aus verschiedenen Patenten hervor.

So werden im GB-A-2 038 835 härtbare Mischungen aus einem Epoxidharz, einem Diaryljodoniumsalz und einem Kupfersalz, Zinnsalz oder einer aktivierten α-Hydroxyverbindung, wie Benzoin, offenbart. Im US-A-4 192 924 werden ähnliche Mischungen offenbart, wobei anstelle von Zinnsalzen oder Hydroxylverbindungen andere Reduktionsmittel, wie beispielsweise Ascorbinsäure oder ihre Derivate eingesetzt werden.

Im GB-A-2 085 011 werden heißhärtbare Epoxidharzmischungen beschrieben, worin das Härtungsmittel aus einer Mischung von einem aromatischen Oniumsalz, beispielsweise Jodoniumsalz, und einer organischen Kupferverbindung, worin das Kupfer komplexgebunden ist, wie Cu-acetylacetonat, besteht.

Überraschenderweise wurde nun gefunden, dass bestimmte Salze, welche Jod in einer höheren Oxidationsstufe enthalten, zum Beispiel Diaryljodosylsalze, gegenüber Epoxidharzen inert sind, wenn man sie allein mit diesen erhitzt, jedoch in Gegenwart eines Salzes oder Komplexes von Übergangsmetallen, wie vorzugsweise Zink, Kobalt, Chrom, Eisen oder Kupfer, eines Zinnsalzes, eines organischen Peroxids oder einer aktivierten α-Hydroxyverbindung, wie Benzoin oder Benzpinakol (1,2-Dihydroxy-1,1,2,2-tetraphenylethane), als Heißhärtungsmittel für Epoxidharze eingesetzt werden können. Aus der zitierten Literatur läßt sich kein Hinweis entnehmen, dass Jodosylsalze in Gegenwart bestimmter Katalysatoren als Heißhärtungsmittel für Epoxidharze eingesetzt werden können.

In einem Artikel von T. H. Beringer und P. Bodlaender, J. Org. Chem., 1968, 33, 2981-4, werden verschiedene Diaryljodosylsalze und deren Herstellung beschrieben. Der Artikel gibt ebenfalls keinen Hinweis auf die Möglichkeit, diese Salze zusammen mit anderen organischen Verbindungen als Heißhärtungsmittel für Epoxidharze einzusetzen.

Die Erfindung betrifft somit die Verwendung einer wirksamen Menge (B) aus

(i) einem Diaryljodosylsatz der Formel I

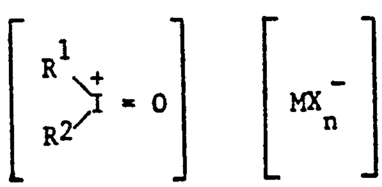

(I),

worin

$R^1$ und $R^2$ gleich oder verschieden sind und je einen monovalenten aromatischen Rest mit 4 bis 25 C-Atomen bedeuten,

M ein Metall- oder Metalloidatom darstellt,

X für ein Halogenatom steht und

n die Zahl 4, 5 oder 6 bedeutet und um eins größer als die Wertigkeit von

M ist oder $MX_n^-$ für Pentafluorhydroxoantimonat steht und

(ii) als Katalysator für das Diaryljodosylsalz einem Salz oder einem Komplex eines d-Block-Übergangsmetalles, einem Zinnsalz, einem organischen Peroxid oder einer aktivierten α-Hydroxylverbindung, als Härtungsmittel in heißhärtbaren, ein Epoxiharz (A) enthaltenden Mischungen.

Zur Verwendung als Komponente (A) bevorzugte Epoxidharze sind solche, die mindestens eine direkt an ein

Sauerstoffatom gebundene Gruppe der Formel II

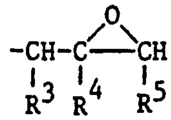

(II),

worin entweder $R^3$ und $R^5$ je für ein Wasserstoffatom stehen, in welchem Fall $R^4$ ein Wasserstoffatom oder eine Methylgruppe bedeutet, oder $R^3$ und $R^5$ zusammen $-CH_2CH_2-$ darstellen, in welchem Fall $R^4$ ein Wasserstoffatom bedeutet, enthalten.

Als Beispiele solcher Harze seien Polyglycidyl- und Poly-(β-methylglycidyl)-ester genannt, die man durch Umsetzung einer zwei oder mehr Carbonsäuregruppen pro Molekül enthaltenden Verbindung mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z. B. Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren wie Tetrahydrophthalsäure, 4-Methyltetrahydrophthalsäure, Hexahydrophthalsäure und 4-Methylhexahydrophthalsäure sowie von aromatischen Polycarbonsäuren, wie Phthalsäure, Isophthalsäure und Terephthalsäure ableiten. Weitere geeignete Polyglycidylester sind durch Vinylpolymerisation der Glycidylester von Vinylsäuren, insbesondere Glycidylacrylat und Glycidylmethacrylat, erhältlich.

Weitere Beispiele sind Polyglycidyl- und Poly-(β-methylglycidyl)-äther, die durch Umsetzung einer mindestens zwei freie alkoholische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Äther lassen sich aus acyclischen Alkoholen wie Äthylenglykol, Diäthylenglykol und höheren Poly(oxyäthylen)-glykolen, Propan-1,2-diol und Poly-(oxypropylen)-glykolen, Propan-1,3-diol, Poly-(oxytetramethylen)-glykolen, Pentan-1,5-diol, Hexan-2,4,6-triol, Glycerin, 1,1,1-Trimethylolpropan, Pentaerythrit, Sorbit und Polyepichlorhydrinen, aus cycloaliphatischen Alkoholen wie Resorcit, Chinit, Bis-(4-hydroxycyclohexyl)-methan, 2,2-Bis-(4-hydroxycyclohexyl)-propan und 1,1-Bis-(hydroxymethyl)-cyclohex-3-en sowie aus Alkoholen mit aromatischen Kernen wie N,N-Bis-(2-hydroxyäthyl)-anilin und p,p'-Bis-(2-hydroxyäthylamino)-diphenylmethan herstellen. Man kann sie ferner aus einkernigen Phenolen wie Resorcin und Hydrochinon und mehrkernigen Phenolen wie Bis-(4-hydroxyphenyl)-methan, 4,4'-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan, 2,2-Bis-(3,5-Dibrom-4-hydroxyphenyl)-propan sowie aus Aldehyden wie Formaldehyd, Acetaldehyd, Chloral und Furfurol, mit Phenol selbst und durch Chloratome oder Alkylgruppen mit jeweils bis zu neun Kohlenstoffatomen ringsubstituiertem Phenol wie 4-Chlorphenol, 2-Methylphenol und 4 tert.-Butylphenol gebildeten Novolaken herstellen.

Epoxidharze mit mindestens einer Gruppe der Formel II, worin wenigstens ein $R^3$ und ein $R^5$ zusammen eine $-CH_2CH_2$-Gruppe darstellen, sind beispielsweise Bis-(2,3-epoxycyclopentyl)-äther, 2,3-Epoxycyclopentylglycidyläther und 1,2-Bis-(2,3-epoxycyclopentyloxy)-äthan.

In Betracht kommen auch Epoxidharze, in welchen die 1,2-Epoxidgruppen an Sauerstoffatome verschiedener Art gebunden sind, z. B. der Glycidyläther/Glycidylester der Salicylsäure.

Ebenfalls einsetzbar sind auch Epoxidharze, in denen einige oder sämtliche Epoxidgruppen nicht endständig sind, wie Vinylcyclohexendioxyd, Limonendioxyd, Dicyclopentadiendioxyd, 4-Oxatetracyclo[6.2.1.$0^{2,7}$.$0^{3,5}$]-undec-9-yl-glycidyläther, 1,2-Bis-(4-oxatetracyclo[6.2.1.$0^{2,7}$.$0^{3,5}$]-undec-9-yloxy)-äthan, der 3,4-Epoxycyclohexylmethylester der 3',4'-Epoxycyclohexancarbonsäure sowie dessen 6,6'-Dimethylderivat, der Bis-(3,4-epoxycyclohexancarbonsäureester) des Äthylenglykols, 3-(3,4-Epoxycyclohexyl)-8,9-epoxy-2,4-dioxaspiro[5.5]undecan sowie epoxidierte Butadiene oder Copolymere von Butadienen mit Äthylenverbindungen wie Styrol und Vinylacetat.

Gewünschtenfalls kann man Epoxidharzgemische verwenden.

Besonders bevorzugte, erfindungsgemäß verwendende Epoxidharze sind gegebenenfalls vorverlängerte Polyglycidyläther von zweiwertigen, dreiwertigen oder vierwertigen Phenolen, z. B. 2,2-Bis-(4-hydroxyphenyl)-propan, Bis-(4-hydroxyphenyl)-methan und 1,1,2,2-Tetrakis-(4-hydroxyphenyl)-äthan, und von zweiwertigen oder dreiwertigen aliphatischen Alkoholen, u. B. Butan-1,4-diol und Hexan-2,4,6-triol.

In den Diaryljodosylsalzen der Formel I sind die Gruppen $R^1$ und $R^2$ vorzugsweise gleich und stellen gegebenenfalls substituierte mono-, di- oder tri-homocyclische oder heterocyclische aromatische Gruppen dar. Beispiele für geeignete heterocyclische aromatische Gruppen sind Thienyl-, Furyl-, Pyridyl- und Pyrazolylgruppen. Geeignete tricyclische aromatische Gruppen sind beispielsweise Anthryl-, Phenanthryl- und Fluorenylgruppen, während als geeignete mono- und dicyclische aromatische Guppen Phenyl- und Naphthylgruppen sowie Gruppen der Formel

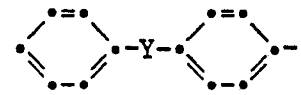 (III),

worin Y für eine Kohlenstoff-Kohlenstoffbindung, ein Äthersauerstoffatom oder eine Gruppe der Formel $CH_2$- oder $-C(CH_3)_2$ - steht, in Frage kommen. All diese aromatischen Gruppen können gegebenenfalls einfach oder mehrfach durch Atome oder Gruppen substituiert sein, welche die Freisetzung einer Art sauren Verbindung bei der Bestrahlung des Diaryljodosylsalzes nicht stören. Typische solche Substituenten sind unter anderem Alkyl- und Alkoxygruppen mit 1 bis 4 Kohlenstoffatomen, Nitrogruppen und Halogenatome.

Bevorzugte Diaryljodosylsalze sind solche, in denen das Kation Diphenyljodosyl ist, das gegebenenfalls an beiden Phenylringen durch ein Alkyl mit 1-4 C-Atomen, eine Nitrogruppe oder ein Halogenatom substituiert ist.

Bevorzugte Metall- und Metalloidatome M im Salz der Formel I sind Bor, Phosphor, Arsen, Antimon, Zinn, Wismut und Eisen. Fluor und Chlor sind die bevorzugten Halogene X in der Formel I. Besonders bevorzugte Anionen $[MX_n]^-$ der Formel I sind $AsF_6^-$, $SbCl_6^-$, $BiCl_6^-$, $SbF_6^-$, $SnCl_5^-$, $FeCl_4^-$, $BF_4^-$ und $PF_6^-$, wobei die beiden letzten insbesondere bevorzugt sind.

Organische Peroxide, welche als Katalysator (ii) in den härtbaren Mischungen verwendet werden können sind beispielsweise Dicumylperoxid, ter.-Butylperbenzoat, tert.-Butylperoxid, insbesondere Benzoylperoxid.

Ein bevorzugtes Zinnsalz stellt Zinnchlorid dar.

Der Katalysator (ii) ist vorzugsweise ein Salz oder ein Komplex eines d-Block-Übergangsmetalles oder eine aktivierte α-Hydroxylverbindung. Die d-Block-Übergangsmetalle sind solche der ersten Übergangsreihe von Scandium bis zum Zink und solche der zweiten Übergangsreihe von Yttrium bis Cadmium. Wie bereits erwähnt, enthalten die bevorzugten, als Katalysator (ii) verwendeten Salze oder Komplexe als Übergangsmetalle Zink, Kobalt, Chrom, Eisen und insbesondere Kupfer. Die Salze können sich von organischen Säuren oder Mineralsäure ableiten und beispielsweise Chloride, Acetate, Trichloracetate, Naphthenate, Octanoate oder Oxalate sein. Geeignete Komplexe sind beispielsweise die π-Orbitalkomplexe und solche, die mit den Liganden innere Komplexe bilden, wie mit Aldehyden, Ketonen, Carboxamiden, aliphatischen Aminomonocarbonsäuren und Aminopolycarbonsäuren. Besonders bevorzugte Komplexe sind solche mit 1,3-Diketonen, wie beispielsweise Acetylaceton und seine Homologen, wie Benzoylaceton, und seine Derivate, wie Acetoacetat.

Unter einer aktivierten α-Hydroxylverbindung versteht man eine Verbindung, worin die Hydroxylgruppe an ein C-Atom gebunden ist, welches in α-Stellung eine aktivierende Gruppe, wie beispielsweise eine Carbonylgruppe oder ein hydroxylsubstituiertes C-Atom, aufweist. Beim Erhitzen bildet eine solche Verbindung freie Radikale. Geeignete aktivierte α-Hydroxyverbindungen sind beispielsweise Ascorbinsäure, Ketone, wie Acyloine oder Benzoine, und aktivierte Diole, wie beispielsweise Pinakol und seine Homologen, insbesondere Benzpinakol.

Gewünschtenfalls können auch bestimmte Katalysatoren (ii) zusammen eingesetzt werden, wie zum Beispiel ein Übergangsmetallsalz oder -komplex, wie Cu-acetylacetonat oder Cu-benzoat, zusammen mit Ascorbinsäure oder mit Benzpinakol.

Die Menge des in der heißhärtbaren Mischung einzusetzenden Diaryljodosylsalzes (i) ist nicht kritisch. Zur Härtung werden lediglich katalytische Mengen benötigt. Im allgemeinen verwendet man 0,01 bis 10 Gew.-%, vorzugsweise 0,5 bis 5 Gew.-%, bezogen auf das Epoxidharzgewicht.

Auch die Menge des Katalysators (ii) ist nicht kritisch und beträgt im allgemeinen zwischen 10 bis 150 Gew.-%, bezogen auf die Gewichtsmenge des Diaryljodosylsalzes.

Ferner können die Mischungen noch andere Materialien enthalten, wie beispielsweise Verdünner, Füllstoffe, wie Quarz, Talk, Glaskügelchen, Tonerde, gepulverte Metalle oder Zinkoxid, Viskositätsmodifizierungsmittel, wie Asbest, Gummi, Klebrigmacher oder Pigmente.

Diaryljodosylsalze der Formel I lassen sich nach einer Methode ähnlich wie von F. M. Beringer und P. Bodlaender, a.a.O., beschrieben, herstellen. Ein Jodaren der Formel IV wird mit Peressigsäure zum entsprechenden Jodoxyaren der Formel V oxydiert. Behandlung des Jodoxyarens oder eines Gemisches von Jodoxyarenen mit einem Alkalihydroxid liefert das Jodosylhydroxyd der Formel VI.

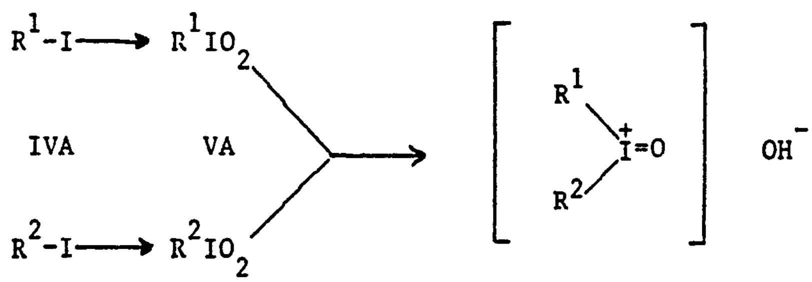

IVA VA

IVB VB VI

Dieses Hydroxid kann mit einer Säure der Formel $HMX_n$, falls die freie Säure existiert, oder deren Alkalimetall- oder Ammoniumsalz behandelt werden, wobei die gewünschten Diaryljodosylsalze der Formel I erhalten werden. Im dargestellten Reaktionsschema haben die Symbole die zuvor angegebene Bedeutung.

Eine andere Möglichkeit besteht darin, das Hydroxid der Formel VI in das entsprechende Carbonat durch Behandeln mit Kohlendioxid umzuwandeln, aus dem man durch Umsetzung mit der Säure $HMX_n$ das Diaryljodosylsalz der Formel I erhält.

Als weitere Möglichkeit kann man das Hydroxid der Formel VI oder das entsprechende Carbonat in das Acetat der Formel VII oder in das Trifluoracetat der Formel VIII umwandeln, welche durch Behandeln mit Alkalimetall oder einem quaternären Ammoniumsalz der Säure $HMX_n$ in das gewünschte Diaryljodosylsalz der Formel I überführt werden können.

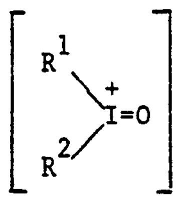 $CH_3COO^-$ VII

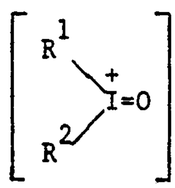 $CF_3COO^-$ VIII

Erfolgt eine solche doppelte Zersetzung mit einer wäßrigen Lösung eines Alkalimetallhexafluoroantimonates, so erhält man wegen Hydrolyse das Pentafluorohydroxoantimonat der Formel I. Um das entsprechende Hexafluoroantimonat zu erhalten, muss man das Alkalihexafluoroantimonat als Feststoff zusetzen.

Die Mischungen lassen sich durch Erhitzen auf Temperaturen über 50°C, vorzugsweise auf Temperaturen zwischen 80 bis 180°C, schnell in den gehärteten Zustand überführen und sind als Giessharze, Beschichtungsmittel, Dichtungsmittel, Klebstoffe und, wenn mit einem Verstärkungsmittel, insbesondere Verstärkungsfasern, kombiniert, zur Herstellung von Verbundwerkstoffen, Schichtpressmassen, Laminaten und imprägnierten Bändern geeignet.

Die Erfindung wird durch die nachfolgenden Beispiele erläutert, in welchen Teile für Gewichtsteile stehen.

Diphenyljodosyl-hexafluorophosphat wird mittels eines der folgenden Verfahren hergestellt:

a. Man löst Diphenyljodosylacetatmonohydrat (1,87 g; nach F. M. Beringer und P. Bodlaender, a.a.O., hergestellt) in siedendem Wasser (25 ml), behandelt mit Entfärbungskohle und filtriert heiß ab. Das Filtrat wird langsam mit gesättigter wäßriger Kaliumhexafluorophosphatlösung versetzt, bis kein Niederschlag mehr auftritt. Dann wird abgekühlt und filtriert. Der Rückstand wird im Vakuum bei Raumtermperatur über Phosphorpentoxid getrocknet, wobei man Diphenyljodosylhexafluorophosphat (0,87 g) vom Schmelzpunkt 120-130°C (Zers.) erhält.

b. Man gibt Jodoxybenzol (3,37 g) unter Rühren zu 1 n-Natronlauge bei 0°C. Nach 2 Stunden filtriert man und versetzt mit einer Lösung von Kaliumhexafluorophosphat (1,32 g) in Wasser (5 ml), wobei sich sofort ein flockiger Niederschlag bildet. Dieser wird abfiltriert, mit eiskaltem Wasser gewaschen, über Phosphorpentoxid getrocknet und aus Chloroform/Petroläther (Siedebereich 40°-60°C) umkristallisiert, wobei man Diphenyljodosylhexafluorophosphat (0,18 g) vom Schmelzpunkt 130°C (Zers.) erhält.

c. Man löst Diphenyljodosyltrifluoracetat (4,1 g; nach F. M. Bernger und P. Bodlaender, a.a.O., hergestellt) durch portionsweise Zugabe vollständig in siedendem Wasser und behandelt die Lösung dann mit Aktivkohle und filtriert heiß ab. Das heiße Filtrat wird mit einer gesättigten wäßrigen Lösung von 1,84 g Kaliumhexafluorophosphat versetzt und die entstehende klare Lösung abgekühlt. Es bildet sich ein weißer

Niederschlag, der abfiltriert wird, was Diphenyljodosyl-hexafluorophosphat (2,72 g) vom Schmelzpunkt 135-136° C (Zers.) ergibt.

Diphenyljodosyltetrafluoroborat wird wie folgt hergestellt:
Man gibt Jodoxybenzol (35,4 g) zu 1 n-Natronlauge (300 ml) unter Rühren und Abkühlung auf 0° C. Nach 2 Stunden wird der Niederschlag durch filtrieren entfernt und das Filtrat mit Kohlendioxid behandelt, bis es neutral wird.
Ein Teil dieser neutralisierten Lösung (100 ml) wird unter Rühren langsam mit Fluoroborsäure (40 %) versetzt, bis die Kohlendioxidentwicklung zum Stillstand kommt; dann wird eine weitere Menge dieser Säure (2 ml) zugesetzt. Der gebildete Niederschlag wird abfiltriert, mit eiskaltem Wasser gewaschen und getrocknet, wobei man Diphenyljodosyl-tetrafluoroborat (2,4 g) vom Schmelzpunkt 110-120° C (Zers.) erhält.

Bis-(4-methylphenyl)-jodosyl-hexafluorophosphat wird wie folgt hergestellt:
Man löst Bis-(4-methylphenyl)-jodosyl-trifluoracetat (1,16 g; nach F. M. Beringer und P. Bodlaender, a.a.O., hergestellt) in siedendem Wasser (90 ml), filtriert und versetzt mit einer gesättigten wässrigen Lösung von 0,49 g Kaliumhexafluorophosphat. Der weiße Niederschlag wird abfiltriert und getrocknet, was Bis-(4-methylphenyl)-jodosylhexafluorophosphat (0,68 g) vom Schmelzpunkt 125° C (Zers.) ergibt.
Verfährt man wie oben, jedoch ausgehend von Bis-(2-methylphenyl)-jodosyl-trifluoracetat (seinerseits nach F.M. Beringer und P. Bodlaender, a.a.O., hergestellt) so erhält man Bis-(2-methylphenyl)-jodosyl-hexafluorophosphat vom Schmelzpunkt 148-150° C (Zers.).
Verfährt man wie oben, jedoch ausgehend von Bis-(4-fluorphenyl)-jodosyl-trifluoracetat (seinerseits nach F. M. Beringer und P. Bodlaender, a.a.O., hergestellt), so erhält man Bis-(4-fluorphenyl)-jodosyl-hexafluorophosphat vom Schmelzpunkt 126° C (Zers.).
Verfährt man wie oben, jedoch ausgehend von Bis-(4-isopropylphenyl)-jodosyl-trifluoracetat (seinerseits gemäß einer ähnlichen Methode wie nach F.M. Beringer und P. Bodlaender, a.a.O., hergestellt), so erhält man Bis-(4-isopropylphenyl)-jodosyl-hexafluorophosphat vom Schmelzpunkt 84° C.

Diphenyljodosyl-hexafluoroarsenat wird wie folgt hergestellt:
Man löst Diphenyljodosyltrifluroacetat (1,2 g; nach F. M. Beringer und P. Bodlaender, a.a.O., hergestellt) in heißem Wasser, behandelt mit Aktivkohle und filtriert heiß. Das Filtrat versetzt man mit einer wäßrigen Lösung von Kaliumhexafluoroarsenat (0,7 g) und kühlt die erhaltene Lösung. Der gebildete weiße Niederschlag wird durch Filtrieren gewonnen und an der Luft getrocknet, was Diphenyljodosyl-hexafluoroarsenat (0,64 g) vom Schmelzpunkt 135-138° C (Zers.) ergibt.

Diphenyljodosyl-hexafluoroantimonat wie folgt hergestellt:
Man löst Diphenyljodosyl-trifluoracetat (1,23 g) in 30 ml heißem Wasser, versetzt mit Natriumhexafluoroantimonat (0,78 g) und kühlt die entstandene Lösung über Nacht auf 0° C. Der gebildete weiße kristalline Feststoff wird durch Filtrieren gewonnen, was 0,5 g Diphenyljodosyl-hexafluoroantimonat vom Schmelzpunkt 142-144° C (Zers.) liefert.
"Epoxidharz I" bedeutet den Polyglycidyläther des 2,2-Bis-(4-hydroxyphenyl)propans mit einem Epoxidgehalt von 5,16 Äquivalenten/kg.
"Epoxidharz II" bedeutet 3,4-Epoxycyclohexylmethyl-3',4'-epoxycyclohexancarboxylat, mit einem Epoxidgehalt von 7,3 Äquivalenten/kg.

**Beispiele 1-10**

Je 100 Teile Epoxidharz I werden mit 0,3 Teilen Diphenyljodosylhexafluorophosphat und der in Tabelle I angegebenen Menge eines Katalysators gemischt und zwecks Herstellung einer gleichmäßigen Suspension mit entsprechenden Mengen Aceton versehen. Die Gelierzeiten dieser Mischungen bei verschiedenen Temperaturen werden mittels der Kofler-Bank bestimmt. Die Ergebisse sind in der folgenden Tabelle wiedergegeben.

**Tabelle 1**

| Beispiel Nr. | Katalysator Typ | Teile | Gelierzeit bei 80°C | 120°C | 150°C | 180°C |
|---|---|---|---|---|---|---|
| Kontrolle | keiner | | - | >16 h | >16 h | >1½ h <16 h |
| 1 | Kupferacetat | 0,05 | 30 min. | 6 min. | - | - |
| 2 | Kupferacetylacetonat | 0.15 | - | 4 min. | - | - |
| 3 | Kupferacetylacetonat<br>Ascorbinsäure | 0.15<br>0.15 | 6 min. | - | - | - |
| 4 | Zinkacetat | 0.2 | - | - | - | 45 min. |
| 5 | Kupfertrichloracetat | 0.2 | - | 1¼ min. | - | - |
| 6 | Kupferchlorid | 0.15 | - | 10 min. | - | - |
| 7 | Chromoxalat (Lösung enthaltend 5 % Cr) | 0,4 | - | - | 40 min. | 40 min. |
| 8 | Kobaltnaphthenat (Lösung enthaltend 8 % Cr) | 1.12 | - | - | - | 55 min. |
| 9 | Ferrocen | 0.3 | - | - | - | 5 sec. |
| 10 | Zinnchlorid | 0.4 | - | - | 26 min. | 4½ min. |

**Beispiele 11 und 12**

Man verfährt wie in Beispielen 1-10, verwendet jedoch anstelle von Epoxidharz I jetzt Epoxidharz II (10 Teile). Die Ergebnisse sind in der folgenden Tabelle angegeben.

**Tabelle 2**

| Beispiel Nr | Katalysator Typ | Teile | Gelierzeit bei 120°C | 150°C |
|---|---|---|---|---|
| Kontrolle | keiner | | 1½ h | 1½ h |
| 11 | Kupferacetylacetonat | 0.15 | 2½ min. | - |
| 12 | Benzoylperoxid (als 50 %-ige Lösung in Dibutylphthalate) | 0.3 | - | 13 min. |

**Beispiele 13 und 14**

Man verfährt wie in Beispielen 1-10, ersetzt jedoch das Diphenyljodosylsalz durch gleiche Gewichtsmengen an Bis-(4-methylphenyl)-jodosyl-hexafluorophosphat oder Diphenyljodosyl-tetrafluoroborat. In beiden Fällen wird als Katalysator Benzpinakol verwendet. Die eingesetzten Mengen und die erhaltenen Ergebnisse sind in folgender Tabelle wiedergegeben.

**Table 3**

| Beispiel Nr. | Jodosylsalz | Teile am Benzpinakol | Gelierzeit bei 150°C | 180°C |
|---|---|---|---|---|
| Kontrolle | Bis-(4-methylphenyl)-jodosyl-hexafluorophosphat | keine | - | >17 h |
| 13 | " | 0.5 | - | 5 sec. |
| Kontrolle | Diphenyljodosyl-tetrafluoroborat | keine | >16 h | >16 h |
| 14 | " | 0.54 | 5 min. | 20 sec. |

**Beispiele 15-17**

Man verfährt wie in Beispielen 1-10, ersetzt jedoch das Diphenyljodosylsalz durch gleiche Mengen von Bis-(2-methylphenyl)-jodosyl-hexafluorophosphat in den Beispielen 15 und 16 und von Bis-(4-isopropylphenyl)jodosyl-hexafluorophosphat in Beispiel 17. Die verwendeten Katalysatoren und die erhaltenen Ergebnisse sind in folgender Tabelle angegeben.

**Tabelle 4**

| Beispiel Nr. | Katalysator | Teile | Gelierzeit bei 120°C | 150°C |
|---|---|---|---|---|
| 15 | Kupferacetylacetonat | 0.15 | 8½ min. | 1 min. 10 sec. |
| 16 | Kupferacetat | 0.15 | - | 5½ min. |
| 17 | Kupferacetylacetonat | 0.15 | 6½ min. | 50 sec. |

**Beispiel 18:**

Es wird analog Beispiel 1-10 gearbeitet unter Verwendung von 50 Teilen Epoxidharz II, 50 Teilen Butan-1,4-dioldiglycidyläther mit einem Epoxidgehalt 9,35 Äquivalenten/kg, 0,3 Teilen Bis-(4-fluorphenyl)iodosyl-hexafluorophosphat als Initiator und 0,1 Teilen Kupferacetat als Beschleuniger, wobei 0,5 Teile Aceton zur Herstellung der Suspension eingesetzt werden. Die Gelierzeit beträgt bei 150°C 9 Minuten und bei 120°C 20 Minuten.

**Beispiel 19:**

Man verfährt wie in Beispielen 1-10 und verwendet 10 Teile Epoxidharz I, 0,3 Teile Diphenyljodosyl-hexafluoroarsenat, 0,1 Teile Kupferacetylacetonat und 0,3 Teile Aceton. Die Gelierzeit beträgt bei 120°C 1,5 Minuten und bei 150°C 40 Sekunden.

**Beispiel 20:**

Es wird analog Beispiel 1-10 gearbeitet unter Verwendung von 10 Teilen Epoxidharz II, 0,3 Teilen Diphenyljodosyl-hexafluoroantimonat und 0,1 Teilen Kupferacetylacetonat. Die Gelierzeit beträgt bei 120°C 1,5 Minuten und bei 150°C 12 Minuten.

**Patentansprüche**

1. Verwendung einer wirksamen Menge (B) aus
(i) einem Diaryljodosylsalz der Formel I

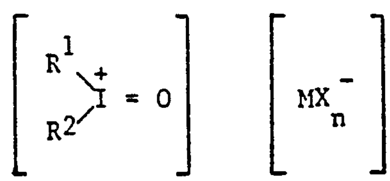

(I),

worin

$R^1$ und $R^2$ gleich oder verschieden sind und je einen monovalenten aromatischen Rest mit 4 bis 25 C-Atomen bedeuten,
M ein Metall- oder Metalloidatom darstellt,
X für ein Halogenatom steht und
n die Zahl 4, 5 oder 6 bedeutet und um eins größer als die Wertigkeit von
M ist oder $MX_n^-$ für Pentafluorhydroxoantimonat steht und
(ii) als Katalysator für das Diaryljodosylsalz einem Salz oder einem Komlex eines d-Block-Übergangsmetalles, einem Zinnsalz, einem organischen Peroxid oder einer aktivierten α-Hydroxylverbindung, als Härtungsmittel in heißhärtbaren, ein Epoxidharz (A) enthaltenden Mischungen.

2. Verwendung von Mischungen gemäß Anspruch 1, worin das Kation des Diaryljodosylsalzes Diphenyljodosyl oder an jedem Phenylring durch Alkyl oder Alkoxy mit 1 bis 4 C-Atomen, eine Nitrogruppe oder ein Halogenatom substituiertes Diphenyljodosyl ist.

3. Verwendung von Mischungen gemäß Anspruch 1, worin in der Formel I M ein Bor-, Phosphor-, Arsen-, Antimon-, Zinn-, Wismut- oder Eisenatom bedeutet.

4. Verwendung von Mischungen gemäß Anspruch 1, worin in der Formel I $[MX_n^-]$ für $AsF_6^-$, $SbCl_6^-$, $BiCl_6^-$, $SbF_6^-$, $SnCl_5^-$, $FeCl_4^-$, $BF_4^-$ oder $PF_6^-$ steht.

5. Verwendung von Mischungen gemäß Anspruch 1, worin der Katalysator (ii) Dicumylperoxid, tert.-Butylperbenzoat, tert.-Butylperoxid oder Benzoylperoxid ist.

6. Verwendung von Mischungen gemäß Anspruch 1, worin der Katalysator (ii) ein Chlorid, Acetat, Trichloracetat, Naphthenat, Octanoat oder Oxalat des Zinks, Kobalts, Chroms, Eisens oder Kupfers ist.

7. Verwendung von Mischungen gemäß Anspruch 1, worin der Katalysator (ii) ein π-Orbitalkomplex des Zinks, Kobalts, Chroms, Eisens oder Kupfers ist oder ein diese Metalle als Zentralatome enthaltenden Innerkomplex mit den Liganden eines Aldehyds, Ketons, Carboxamids, einer aliphatischen Aminomonocarbonsäure oder Aminopolycarbonsäure ist.

8. Verwendung von Mischungen gemäß Anspruch 1, worin der Katalysator (ii) Ascorbinsäure, ein Acyloin, ein Benzoin, Pinakol oder Benzpinakol ist.

9. Verwendung von Mischungen gemäß Anspruch 1, enthaltend 0,01 bis 10 Gewichts-% des Diaryljodosylsalzes (i), bezogen auf das Epoxidharzgewicht, und 10 bis 150 Gewichts-% des Katalysators (ii), bezogen auf das Gewicht des Diaryljodosylsalzes.

**Claims**

1. Use of an effective amount (B) of
(i) a diaryliodosyl salt of the formula I

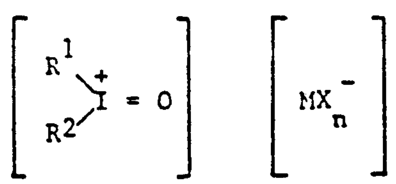

(I)

wherein
$R^1$ and $R^2$ are identical or different and are each a monovalent aromatic radical having 4 to 25 C atoms,
M is a metal atom or metalloid atom,
X is a halogen atom and
n is the number 4, 5 or 6 and is greater by one than the valency of
M or $MX_n^-$ is pentafluorohydroxoantimonate and
(ii) as catalyst for the diaryliodosyl salt, a salt or a complex of a d-block transition metal, a tin salt, an organic peroxide or an activated α-hydroxy compound,
as curing agent in heat curable mixtures containing an epoxy resin (A).

2. Use of mixtures according to claim 1, wherein the cation of the diaryliodosyl salt is diphenyliodosyl or diphenyliodosyl which is substituted on each phenyl ring by alkyl or alkoxy having 1 to 4 C atoms, by a nitro group or by a halogen atom.

3. Use of mixtures according to claim 1, wherein in the formula I M is a boron, phosphorus, arsenic, antimony, tin, bismuth or iron atom.

4. Use of mixtures according to claim 1, wherein in the formula I $[MX_n^-]$ is $AsF_6^-$, $SbCl_6^-$, $BiCl_6^-$, $SbF_6^-$, $SnCl_5^-$, $FeCl_4^-$, $BF_4^-$ or $PF_6^-$.

5. Use of mixtures according to claim 1, wherein the catalyst (ii) is dicumyl peroxide, tert-butyl perbenzoate, tert-butyl peroxide or benzoyl peroxide.

6. Use of mixtures according to claim 1, wherein the catalyst (ii) is a chloride, acetate, trichloroacetate, naphthenate, octanoate or oxalate of zinc, cobalt, chromium, iron or copper.

7. Use of mixtures according to claim 1, wherein the catalyst (ii) is a π-orbital complex of zinc, cobalt, chromium, iron or copper or is an inner complex which contains these metals as central atoms and has as ligands an aldehyde, ketone, carboxamide, an aliphatic aminomonocarboxylic acid or aminopolycarboxylic acid.

8. Use of mixtures according to claim 1, wherein the catalyst (ii) is ascorbic acid, an acyloin, a benzoin, pinacol or benzpinacol.

9. Use of mixtures according to claim 1, containing 0.01 to 10 % by weight of the diaryliodosyl salt (i), based on the weight of epoxy resin, and 10 to 150 % by weight of the catalyst (ii), based on the weight of the diaryliodosyl salt.

**Revendications**

1. Application d'une quantité efficace (B):

(i) d'un sel de diaryl-iodosyle répondant à la formule I:

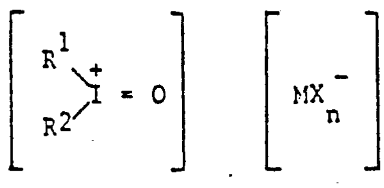

(I)

dans laquelle

$R^1$ et $R^2$ représentent chacun, indépendamment l'un de l'autre, un radical aromatique univalent qui contient de 4 à 25 atomes de carbone,

M représente un atome de métal ou de métalloïde,

X représente un atome d'halogène et

n représente un nombre égal à 4, à 5 ou à 6, nombre qui est supérieur d'une unité à la valence de M, ou $MX_n^-$ représente l'ion pentafluoro-hydroxo-antimoniate, et,

(ii) comme catalyseur pour le sel de diaryl-iodosyle, d'un sel ou d'un complexe d'un métal de transition de bloc d, d'un sel d'étain, d'un peroxyde organique ou d'un composé $\alpha$-hydroxylique activé,

comme durcisseur dans des mélanges thermodurcissables contenant une résine époxydique (A).

2. Application de mélanges selon la revendication 1, selon laquelle le cation du sel de diaryl-iodosyle est le cation diphényl-iodosyle ou un cation diphényliodosyle qui porte, sur chacun de ses radicaux phényles, un radical alkyle ou alcoxy contenant de 1 à 4 atomes de carbone, un radical nitro ou un atome d'halogène.

3. Application de mélanges selon la revendication 1, application selon laquelle, dans la formule I, le symbole M représente un atome de bore, de phosphore, d'arsenic, d'antimoine, d'étain, de bismuth ou de fer.

4. Application de mélanges selon la revendication 1, application selon laquelle, dans la formule I, $[MX_n^-]$ représente $AsF_6^-$, $SbCl_6^-$, $BiCl_6^-$, $SbF_6^-$, $SnCl_5^-$, $FeCl_4^-$, $BF_4^-$ ou $PF_6^-$.

5. Application de mélanges selon la revendication 1, caractérisée en ce que le catalyseur (ii) est le peroxyde de dicumyle, le perbenzoate de tert-butyle, le peroxyde de tert-butyle ou le peroxyde de benzoyle.

6. Application de mélanges selon la revendication 1, caractérisée en ce que le catalyseur (ii) est un chlorure, un acétate, un trichloracétate, un naphténate, un octanoate ou un oxalate de zinc, de cobalt, de chrome, de fer ou de cuivre.

7. Application de mélanges selon la revendication 1, caractérisée en ce que le catalyseur (ii) est un complexe à orbitales $\pi$ du zinc, du cobalt, du chrome, du fer ou du cuivre, ou un complexe interne contenant l'un de ces métaux comme atome central et, comme coordinats, des aldéhydes, des cétones, des carboxamides, des acides aminopolycarboxyliques ou des acides amino-monocarboxyliques aliphatiques.

8. Application de mélanges selon la revendication 1, caractérisée en ce que le catalyseur (ii) est l'acide ascorbique, une acyloïne, une benzoïne, le pinacol ou le benzopinacol.

9. Application de mélanges selon la revendication 1 qui contiennent de 0,01 à 10 % en poids du sel de diaryl-iodosyle (i), par rapport au poids de la résine époxydique, et de 10 à 150 % en poids du catalyseur (ii), par rapport au poids du sel de diaryl-iodosyle.